# EUROPÄISCHE PATENTSCHRIFT

(11) **EP 2 117 841 B1**
(45) Veröffentlichungstag und Bekanntmachung des Hinweises auf die Patenterteilung: **09.03.2016**
(21) Anmeldenummer: 07857003.3
(22) Anmeldetag: 20.12.2007
(51) Int. Cl.: B32B 37/00, B32B 37/15, B05C 5/00

(54) **LAMINIERVERFAHREN UND -VORRICHTUNG ZUM AUFTRAGEN EINES FILMS EINER KLEBSTOFFZUSAMMENSETZUNG AUF EIN BAHNFÖRMIGES SUBSTRAT**
LAMINATING PROCESS AND APPARATUS FOR APPLYING AN ADHESIVE-COMPOSITION FILM TO A WEB-LIKE SUBSTRATE
PROCÉDÉ ET DISPOSITIF DE STRATIFICATION AFIN D'APPLIQUER UN FILM D'UNE COMPOSITION D'ADHÉSIF SUR UN SUBSTRAT EN FORME DE BANDE

(30) Priorität: 20.12.2006 DE 102006060954
(43) Veröffentlichungstag der Anmeldung: 18.11.2009
(73) Patentinhaber: Illinois Tool Works Inc., Glenview, IL 60025 (US)
(72) Erfinder: ROTHEN, Josef, 42699 Solingen (DE)
(74) Vertreter: Roche, von Westernhagen & Ehresmann
(86) Internationale Anmeldenummer: PCT/EP2007/011280
(87) Internationale Veröffentlichungsnummer: WO 2008/074508

(56) Entgegenhaltungen:
- EP-A- 0 778 127
- EP-A- 0 836 927
- WO-A-96/25902
- WO-A-97/40947
- DE-A1- 10 012 346
- DE-A1- 19 735 588

## Beschreibung

### GEBIET DER ERFINDUNG

Die Erfindung betrifft eine Vorrichtung zur Durchführung eines Laminierverfahrens bei dem eine fließfähige oder fließfähig gemachte Klebstoffzusammensetzung, insbesondere ein Heißschmelzkleber, aus einem Beschichtungsgerät als ein im Wesentlichen kontinuierlicher oder durchbrochener Film abgegeben und auf die Oberfläche mindestens eines bahnförmigen Substrates, ggf. nach vorheriger Abgabe an ein fortschreitendes Übertragungssubstrat, wie einer Walze, und nachfolgender Übertragung auf das bahnförmige Substrat, aufgetragen und dort fixiert wird, sowie eine entsprechende Laminiervorrichtung,

### TECHNISCHER HINTERGRUND

Gattungsgemäße Laminierverfahren und Laminiervorrichtungen sind unter Anderem aus der WO96/25902 und der WO99/28048 bekannt. Während die WO96/25902 vorsieht, dass der kontinuierliche Film einer Klebstoffzusammensetzung ohne Berühren durch das Auftragsgerät auf ein erstes Substrat aufgebracht, so dann ein zweites Substrat auf den kontinuierlichen Film der Klebstoffzusammensetzung aufgelegt und nach-folgend dieses dreischichtige Gebilde durch einen Quetschspalt zwischen zwei gegeneinander gedrückte Walzen geführt wird, um Luft zwischen den beiden Substraten und dem Klebstofffilm herauszupressen, sieht die WO99/28048 vor, den Klebstofffilm nach Auftragen auf ein erstes bahnförmiges Substrat auf dem Substrat dadurch anzudrücken, dass das bahnförmige Substrat samt dem kontinuierlichen Klebstofffilm durch einen Quetschspalt zweier gegeneinander gedrückter Walzen geführt wird. Das weitere Substrat wird auf der klebstoffbeschichteten Seite erst nachfolgend zur Anlage gebracht und in einem weiteren von zwei Andruckwalzen gebildeten Quetschspalt aufgepresst. Während es bei den aus diesen beiden Druckschriften bekannten Verfahren gewünscht wird, den kontinuierlichen Film der Klebstoffzusammensetzung ohne Kontakt des Beschichtungsgerätes mit dem Substrat oder einer Walze auf das erste Substrat aufzubringen, arbeiten andere in diesen beiden Druckschriften genannte Verfahren auch mit Kontakt, wie z.B. mittels einer Leck- oder Auftragwalze oder anderen Direktkontaktverfahren, z. B. in unmittelbarem Kontakt einer Schlitzdüse mit dem ersten Substrat.

Durch ein Anpressen des kontinuierlichen Films der Klebstoffzusammensetzung gegen eines oder beide der Substrate mittels eines Quetschwalzenspaltes verteilt sich der Klebstofffilm ungleichmäßig auf dem mindestens einen Substrat, weil das Substrat zumindest eine mikroskopische, gelegentlich aber auch eine makroskopische Unregelmäßigkeit auf seiner zu kaschierenden Oberfläche aufweist. In dem Quetschspalt wird aus dem zunächst im Wesentlichen durchgehend gleichmäßigen Film der Klebstoffzusammensetzung ein ungleichmäßig dicker Film, in dem die fließfähigen Bestandteile der Klebstoffzusammensetzung in "Täler" der Substratoberfläche sich anhäufen, während von den hervorstehenden "Spitzen" oder "Hügeln" der Oberflächenstruktur des Substrates Klebstoff in Richtung der "Täler" fortgequetscht wird. Darunter leiden insgesamt die Haftungsfähigkeit des Laminats und/oder andere Eigenschaften wie z.B. die Klarheit der Durchsichtigkeit eines durchsichtigen Laminiersubstrates.

An den seitlichen Rändern des Films der Klebstoffzusammensetzung tritt bei den kontaktlosen Auftragsverfahren, dem so genannten "curtain coating", ein weiteres Problem mit der Regemäßigkeit der Auftragsdicke auf, denn der Film zieht sich auf seinem Weg von der Schlitzdüse zum Substrat von seinen Seitenrändern her zur Mitte hin zusammen (so genanntes "neck in"). Dadurch lagert sich auf dem Substrat an den Auftragsränclern des Films eine Spur deutlich dickerer Beschichtungsstärke ab. Diese ist beim Aufwickeln des bahnförmigen Substrats - auch bei nur geringem Dickenunterschied im Vergleich zur Bahnmitte - nicht akzeptabel. Diese Ränder vergrößerter Dicke müssen durch Längsteilen der Bahn abgeschnitten und als Abfall verworfen werden. Hier geht also sowohl Substratmaterial als auch Klebstoffzusammensetzung unwiederbringlich verloren.

### DARSTELLUNG DER ERFINDUNG

Um die Gleichmäßigkeit eines Klebstofffilms nach dem Auftragen auf ein bahnförmiges Substrat zu verbessern, wird eine Laminiervorrichtung mit den Merkmalen des Anspruches 1 vorgeschlagen. Dementsprechend wird der Film der Klebstoff-Zusammensetzung an seinen Rändern von den Filmbegrenzungselementen über den Düsenschlitz nach außen hinaus eingespannt oder eingesäumt bis auf das Substrat geführt.

Durch die Erfindung wird das sogenannte "neck in" unterdrückt. Trotzdem ist es möglieh, den am Düsenschlitz austretenden Film der Klebstoffzusammensetzung auf seinem Weg zum Substrat dünn auszuziehen und damit die Auftragsdicke zu beeinflussen und insbesondere besonders dünn zu gestalten.

Um die seitliche Längskante des Films der Klebstoffzusammensetzung an den über den Düsenschlitz nach außen vortretenden Filmbegrenzungselementen besser zu halten, können verschiedene zusätzliche Maßnahmen ergriffen werden. Die eine besteht darin, entlang der Einspannstrecke den Film zu kühlen. Dies geschieht bevorzugt mittels, insbesondere fahnenförmiger, Wärmeaustauschelemente, die mit den Filmbegrenzungselementen wärmeleitend in Verbindung stehen. Hierzu können die Wärmeaustauschelemente mit Kühlkanälen versehen oder wärmeleitend verbunden sein. Alternativ oder kumulativ kann Blasluft auf den Filmrand zum Kühlen und/oder zur Unterdruckerzeugung und/oder zum seitlichen Strecken des Films gerichtet sein. Zusätzlich oder alternativ zu diesen Maßnahmen ist es möglich, profilierte Führungskanten zum Einsäumen bzw. Einspannung der seitlichen Ränder des Films zur Anwendung kommen, wie nutenförmige, schwalbenschwanzförmige oder Kehlen, Falze oder dergleichen aufweisende Führungsprofile. Die Wärmeaustauschelemente werden vorzugsweise nicht auch als Führungskanten genutzt, bleiben also vorzugsweise frei von Benetzung durch die Klebstoffzusammensetzung.

Unter "Einspannen" des Klebstofffilms wird im Sinne der Erfindung verstanden, dass Querkräfte auf das Filmmaterial in Richtung zu den Rändern hin wirken. Unter "Einsäumen" wird verstanden, dass die Filmseitenränder spannungsfrei geführt werden. In beiden Fällen ist eine Filmrandführung vorhanden. Ein "im wesentlichen kontinuierlicher" Film im Sinne der Erfindung bedeutet, das dieser geschlossen, d.h. ohne Unterbrechungen ist und ggf. auch wasserundurchdringlich ist. Ein "durchbrochener" Film im Sinne der Erfindung ist ein solcher Film, der zum Teil durchbrochen ist. Solche Durchbrechungen können je nach Anwendungsfall größer oder kleiner sein und im Extremfall mit bloßem Auge nicht wahrnehmbar sein, wobei Luft und/oder Wasser diesen Film gleichwohl durchdringen könnten.

### 6

Die den Düsenschlitz in Richtung auf das Substrat überragenden Filmbegrenzungselemente können sowohl relativ biegesteif als auch einigermaßen biegeelastisch ausgeführt werden. Sie können sowohl kurz vor dem Substrat enden als auch das Substrat streichend berühren. Letzteres ist bei den meisten Substraten unschädlich, zumal der Substratrand in den meisten Anwendungsfällen später ohnehin verworfen wird.

Lippenförmige Filmbegrenzungselemente sind im Stand der Technik an sich bekannt (US 3,867,901 A, US 4,830,887 A, WO 98/47 630). Die USen 3,87,901 A und 4,830,887 A beschreiben das "Curtain Coating" von fotographischen Filmmaterial mit fotographischen Beschichtungszusammensetzungen, bei denen ein niedrigviskoser Film der fotographischen Beschichtungszusammensetzung auf einer gebogenen Überlauffläche mit Abreißkante Schwerkraft getrieben abfließt. Zur Führung dieses abfließenden Filmes werden seitliche Filmbegrenzungselemente verwendet. Die US 4,830,887 A schlägt insoweit vor, die Filmbegrenzungselemente als Hohlkanal mit einem längserstreckten Verbindungsschlitz zu dem Film aus der fotographischen Beschichtungszusammensetzung zu verbinden und unter Unterdruck zu halten, um Überschussmaterial der niederviskosen Flüssigkeit absaugen und gegebenenfalls wieder verwenden zu können. Derartige Konstruktionen haben sich im Zusammenhang mit unter Druck aus einer Schlitzdüse ausgepressten erhitzten Klebstoffzusammensetzungen, wie Heißschmelzkleber als nicht brauchbar erwiesen. Auch das aus der WO 98/47 630 bekannte Auftragsverfahren für Dispersionen, wie von wässrigen Haftklebern sind für Kaschierungszwecke unter Verwendung von Heißschmelzklebern und dergleichen vergleichsweise zähflüssigen Klebstoffen nicht geeignet. Dieses Dokument schlägt vor, die Gleitfähigkeit zwischen dem hängenden niedrig viskosen Film und den seitlichen Filmbegrenzungselementen eine Hilfsflüssigkeit über einen Zuführkanal einzuspeisen. Auch durch derartige Speiseflüssigkeiten geht Verbrauchsmaterial bei dem Prozess verloren.

Gemäß dem Stand der Technik ist aus den Figuren 6 und 7 der WO 97/40947 eine Vorrichtung zum Durchführen eines "Curtain Coatings" bekannt (im Gegensatz zu den Figuren 1 bis 5, welche eine Vorrichtung nach Art eines "slide coatings" offenbaren), wobei Fluide aufgetragen werden, welche teils feste und teils flüssige Komponenten enthalten, beispielsweise Klebstoffe. Die Schlitzdüse ist bei der dort gezeigten Vorrichtung jedoch stets mit ihrem Auslass nach oben gerichtet (also von der zu beauftragenden Fläche fortorientiert), da dem Auslass eine Art Abdeckung zugeordnet ist, um unter der Abdeckung, dem Düsenschlitz zugeordnet, eine gesonderte Atmosphäre zu ermöglichen, welche einem Entweichen der flüchtigen Komponenten entgegenwirkt. Damit das Fluid auf eine zu benetzende Oberfläche aufgetragen werden kann, wird es nach Austritt aus dem Düsenschlitz zunächst eine sich horizontal erstreckende Benetzungsfläche entlanggeführt, welche von seitlichen Randbegrenzungen umgeben ist. Anschließend kann das Fluid nach Art eines Vorhangs auf die zu beauftragende Oberfläche hinabströmen, welche unterhalb der Vorrichtung vorbeigeführt wird. Zur geregelten Beauftragung sind gesondert an der Vorrichtung angeordnete, seitliche Führungen vorgesehen. Diese Führungen sind zur Ermöglichung einer gesonderten Atmosphäre ebenfalls von einer insbesondere zylindrischen Abdeckung umgeben. Aus dieser Schrift sind keine Filmbegrenzungselemente bekannt, welche von einem Düsenschlitz nach außen in Richtung eines bahnförmigen Substrates hervortreten (vielmehr sind die genannten Führungen entfernt von dem Düsenschlitz angeordnet und zudem weist der Schlitz von dem Substrat fort). Dementsprechend ist auch kein Wärmeaustauschelement entlang eines derartigen Filmbegranzungselementes vorgesehen, welches Wärme beim Heraustreten aus dem Schlitz an die Umgebungsatmosphäre abführt.

Um auch im übrigen, d.h. im außerhalb der Ränder liegenden Bereich des Klebstofffilms, dessen Gleichmäßigkeit zu verbessern, wird als Anpressmittel ein zwischen mehreren Umlenkkörpern umlaufendes Anpressband vorgeschlagen, sowie mindestens ein weiteres Umlenkmittel, mit dem das mindestens eine Substrat oder die Klebstoffzusammensetzung auf einer Lauflänge in Anlage an dem Anpressband derart gehalten wird, dass sich eine weitere Umlenkung des Anspressbandes ergibt, wobei vorzugsweise das mindestens eine weitere Umlenkmittel im Bereich einer Teillänge des Anpressbandes angeordnet ist bzw. sind, der zwischen zwei der Umlenkkörper des Anpress-bandes gelegen ist. Ein derartiges Anpressmittel ist - auch unabhängig von Anspruch 1 - von eigenständiger erfinderischer Bedeutung.

Es hat sich herausgestellt, dass bei einer derartigen Anpresseinrichtung das umlaufende Anpressband schon aufgrund seiner für seine Umlenkbarkeit um die Umlenkkörper erforderlichen Flexibilität eine Nachgiebigkeit quer zur Laufrichtung aufweist, die die aus dem Stand der Technik bekannten Unregelmäßigkeiten des angepressten Klebstofffilmes deutlich vermindert.

Es ist nun auf verschiedene Weise möglich, die gattungsgemäßen Verfahren und Vorrichtungen an den Anwendungsfall anzupassen und/oder auch die mikroskopische Gleichmäßigkeit der Klebstoff-Filmdicke weiter zu vergrößern.

Anders als bei Quetschwalzen aus elastischem Material oder mit elastischem Überzug, bei denen der so genannte Nipp, d.h. die Länge der Quetschzone in Laufrichtung relativ stark von anderen Betriebsparametern der Anpresseinrichtung und der für die Substrate und die Klebstofffilme verwendeten Materialien und Materialstärken sowie Anpressdrücken abhängt, ist die Länge des Nipps bei der vorliegenden Erfindung vergleichsweise gering beeinflusst von den vorerwähnten Einflussgrößen. Erfindungsgemäß können vergleichsweise lange Nipps realisiert werden, was zu einer besseren Schonung der Substrate und des Klebstofffilms führt.

Um eine möglichst hohe Reproduzierbarkeit des Klebstoffbeschichtungsergebnisses zu erreichen, ist es von Vorteil, ein einigermaßen dehnungsarmes Anpressband zu verwenden.

Wenn das umlaufende Anpressband quer zu seiner Laufrichtung besonders biegeelastisch ausgebildet ist, wird dadurch eine weitere Vergleichmäßigung der Klebstofffilmdicke auf dem mindestens einen Substrat im angepressten Zustand erreicht.

Bei der erfindungsgemäßen Laminiervorrichtung ist sowohl die kontaktlose Abgabe des kontinuierlichen Films der Klebstoffzusammensetzung von dem Abgabegerät auf das Substrat möglich, wie es unter anderem in WO96/25902 und WO99/28048 und weiteren Druckschriften beschrieben ist. Grundsätzlich ist aber auch eine Abgabe des Films einer Klebstoff-Zusammensetzung möglich, bei der die Abgabevorrichtung im Kontakt zum Substrat steht. Auch ist es wahlweise möglich, das mit dem kontinuierlichen Film der Klebstoffzusammensetzung versehene erste Substrat zunächst durch ein weiteres bahnförmiges Substrat abzudecken und dann erst das Anpressen erfindungsgemäß durchzuführen. Besonders vorteilhaft ist es, wenn der kontinuierliche Film der Klebstoff-Zusammensetzung nach dem Auftrag auf das erste bahnförmige Substrat zunächst angepresst wird. Ein derartiges Produkt kann auch beliebige Zeit später erst zum kaschieren verwendet werden ohne seinerseits mit einer Kaschierschicht versehen werden, wobei die Haftvermittlung durch die Klebstoffzusammensetzung auf dem ersten Substrat ermöglicht wird. Ebenfalls liegt es im Wesen der vorliegenden Erfindung, dass der Film der Klebstoffzusammensetzung an bestimmten Stellen, an denen kein Klebstoff auf dem Substrat benötigt wird, den Klebstoff bereichsweise auszusparen.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel einer Laminiervorrichtung dargestellt ist.

### KURZBESCHREIBUNG DER FIGUREN

In der Zeichnung zeigen:
- Fig. 1: eine Vorrichtung zum Auftragen eines Films einer Klebstoffzusammensetzung auf ein bahnförmiges Substrat in perspektivischer Ansicht;
- Fig. 2A: von einer Laminiervorrichtung zum Auftragen eines Films einer Klebstoffzusammensetzung auf ein bahnförmiges Substrat eine ausschnittsweise Schnittdarstellung durch den Film im Bereich zwischen einer Schlitzdüse und einem Substrat - etwa entsprechend Schnitt II - II gemäß Fig. 1 - mit zwei verschiedenen Filmbegrenzungselementen;
- Fig. 2B: eine alternative Ausführungsform eines Filmbegrenzungselementes sowie
- Fig. 3: eine Laminiervorrichtung mit Anpressband in einer Seitenansicht, etwa entsprechend Ansicht A gemäß Fig. 1.

### DETAILLIERTE BESCHREIBUNG VON AUSFÜHRUNGSBEISPIELEN

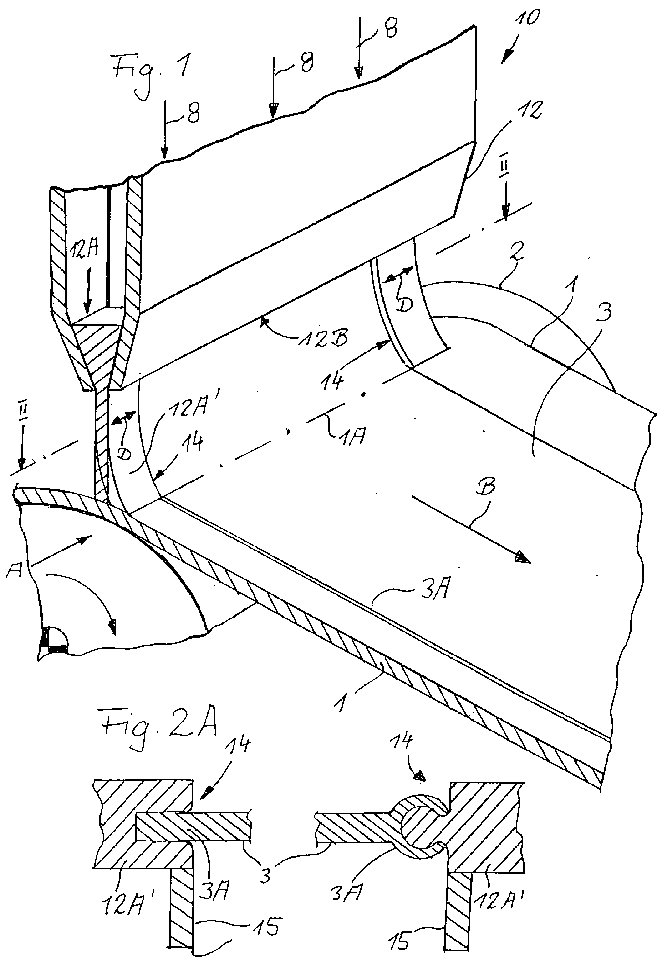

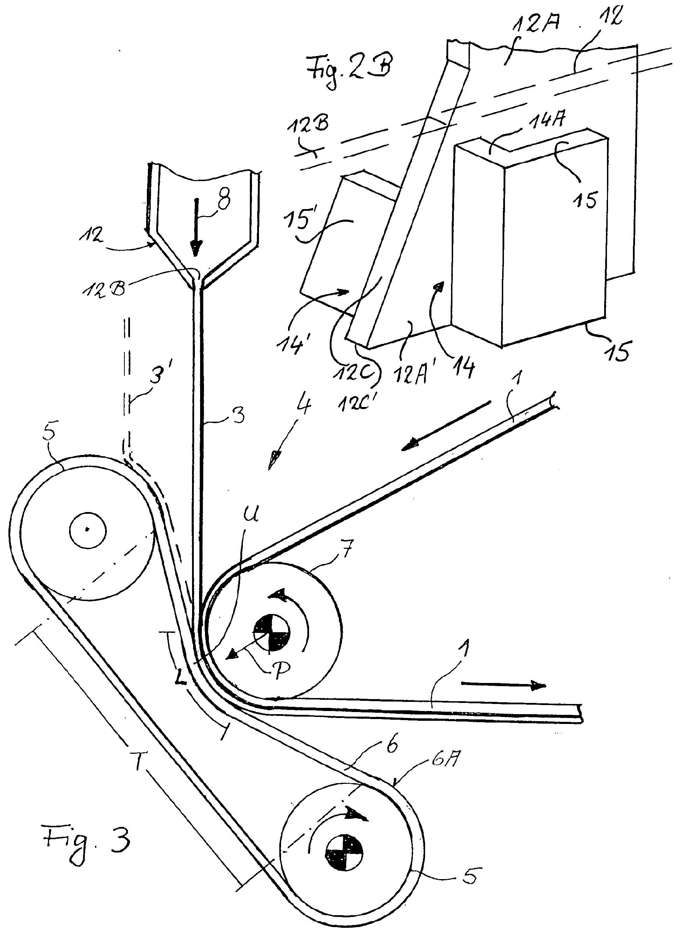

In Figur 1 ist ein Ausschnitt eines insgesamt mit 10 bezeichneten Beschichtungsgerätes dargestellt, von dem man in erster Linie die Schlitzdüse 12 erkennt, in deren Düsenschlitz 12B beidseitig Filmbegrenzungselemente 12A angeordnet sind, um den Düsenspalt beidseitig zu begrenzen. Doppelpfeile D deuten die Verschiebbarkeit der Filmbegrenzungselemente entlang des Düsenschlitzes 12B an. Jedes Filmbegrenzungselement 12A weist eine, in der Zeichnung lippenähnliche, über die Engstelle des Düsenschlitzes 12B nach außen in Richtung auf ein bahnförmiges Substrat 1 gerichtete Verlängerung 12A auf. Diese ist in der Schnittdarstellung gerade erstreckt dargestellt. Diese Verlängerung kann aber einigermaßen biegeelastisch sein und - je nach dem Verhältnis von Länge der Verlängerung zum Abstand des Düsenschlitzes 12B zu dem Substrat 1 - einen in Bewegungsrichtung B des bahnförmigen Substrates 1 gebogenen, in Figur 1 beispielhaft dargestellten gekrümmten Verlauf einnehmen. Die Verlängerungen 12A' können eine profilierte Führungskante 14 aufweisen, wie sie beispielhaft in Figur 2A oder 2B in drei verschiedenen Ausführungen dargestellt ist.

In Figur 2A ist die Profilierung in der linken Bildhälfte nutenartig und in der rechten Bildhälfte stegartig, wobei das konkrete Ausführungsbeispiel eine kederartige Querschnittsform erkennen lässt. Die Profilierung dient dazu, das Führen und Festhalten der seitlichen Ränder 3A eines Films 3 einer fließfähigen Klebstoff-Zusammensetzung an den Filmbegrenzungselementen zu verbessern.

Figur 2B zeigt eine alternative Ausführungsform eines Filmbegrenzungselementes 12A in perspektivischer Darstellung. Unterhalb des gestrichelt angedeuteten Düsenschlitzes 12B der Schlitzdüse 12 erstreckt sich eine zum nicht dargestellten Substrat hin gerichtete Verlängerung 12A' des Filmbegrenzungselementes 12A. Dessen den in der Zeichnung nicht dargestellten Film einer Klebstoffzusammensetzung begrenzende Filmbegrenzungsfläche 12C ist bei diesem Ausführungsbeispiel nicht rechtwinklig sondern schräg nach innen verlaufend bezüglich der Düsenschlitzes 12B erstreckt. Damit wird zur Schlitzdüse 12 hin eine Verbreiterung des herzustellenden Filmes der Klebstoffzusammensetzung erzeugt, so dass sich die Querkräfte in der Filmebene (quer zur Fließrichtung des Filmes) auf dem Weg bis zum Substrat zumindest teilweise abbauen können. Dadurch sind die entsprechenden Kräfte an der unteren Abrisskante 12C' der Filmbegrenzungsfläche 12C vorteilhaft verringerbar. Eine Filmführungskante 14 wird durch eine kehlenförmige Profilierung erzeugt, die sich zwischen der vertikalen Verlängerung 12A des Filmbegrenzungselementes und einem daran seitlich, z.B. etwa flächennormal zum Film der Klebstoffzusammensetzung angesetzten Führungsschenkel 14A sich ergibt. An den Führungsschenkel 14A schließt sich eine als Wärmeaustauschelement dienende Wärmeaustauschfahne 15 an, welche von der kehlenförmigen Profilierung der Führungskante 14 fortweisend ausgerichtet ist und von dem Film der Klebstoffzusammensetzung so gut wie überhaupt nicht mehr oberflächenbedeckt wird. Diese Wärmeaustauschfahne 15 ist in dem Ausführungsbeispiel bezüglich der Verlängerung 12A' freigeschnitten oder hinterlüftet, so dass optimaler Wärmeaustausch möglich ist. Die in der kehlenförmigen Profilierung 14 anfallende Wärme der erhitzten KlebstoffZusammensetzung wird damit wirkungsvoll abgeführt, so dass die Haftung der Filmränder des Films der Klebstoffzusammensetzung an der Führungskante 14 ausreicht, um ein Neck-in des Filmes so gut wie vollständig zu vermeiden. Lediglich beispielhaft ist auf der gegenüberliegenden Seite der Verlängerung 12A' eine weitere Wärmeaustauschfahne 15' dargestellt, die sich etwa parallel aber von der Filmbegrenzungsfläche 12C versetzt angeordnet erstreckt und in wärmeleitendem Kontakt zu der Filmbegrenzungsfläche 12C und der gegebenenfalls weiteren Führungskante 14' erstreckt.

Wie weiter aus Figur 1 ersichtlich, wird ein bahnförmiges Substrat 1, wie eine Bahn aus Recyclingpapier, über eine Walze 2, welche von dem bahnförmigen Substrat 1 teilumschlungen ist, in Bewegungsrichtung B angetrieben. Eine geschmolzene Klebstoffzusammensetzung 8, dient in den Düsenspalt 12B mit Druck hineingepresst wird, verlässt den Düsenspalt 12B als dünner, sehr flexibler Film 3, der, eingespannt zwischen den über den Düsenschlitz hinausragenden Teilen der Filmbegrenzungselemente 12A, auf das bahnförmige Substrat 1 geführt wird. In dem dargestellten Ausführungsbeispiel befindet sich die strichpunktierte Berührungslinie 1A etwa am Ende des Umschlingungsbereiches des Substrates 1 um die angetriebene Walze 2. Eine ähnliche Übergabeposition des Filmes 3 ist in Figur 3 gestrichelt dargestellt. Der Film 3, wie auch das Substrat 1 sind in den Zeichnungen übertrieben dick dargstellt, um die Lesbarkeit der Zeichnung zu verbessern. Eine Verdickung des Films 3 im Bereich der Filmränder 3A, wie sie vom Stand der Technik bekannt ist, sowie eine Einschnürung (neck in) zur Bahnmitte hin, also eine Breitenverringerung im Vergleich zu den Austrittmaßen des Düsenschlitzes, findet nicht statt.

Aus Figur 3 ist ersichtlich, wie ein aus einer Schlitzdüse 12 abgegebener Film 3 einer Klebstoff-Zusammensetzung 8 mit einem bahnförmigen Substrat 1 unter Bildung eines Laminates aneinander gepresst werden kann. Als Anpresseinrichtung 4 dient ein um walzenartige Umlenkkörper 5 laufendes Anpressband 6 und ein Umlenkmittel 7, das eine weitere Umlenk U des Anpressbandes 6 erzeugt. Das Umlenkmittel 7, welches in der Zeichnung als, insbesondere drehangetriebene, Walze dargestellt und insoweit bevorzugt ist, ist im Bereich einer Teillänge T des Anpressbandes 6 angeordnet, die zwischen den Umlenkkörpern 5 gelegen ist. Das Anpressband 6 ist hinreichend dehnungsarm, um dem Anpressdruck P des Umlenkmittels 7 nicht übermäßig auszuweichen und eine entsprechend hohe Reaktionskraft auf den Pressbereich zwischen dem Film 3 und dem bahnförmigen Substrat 1 zu erzeugen. Durch die Umlenkung U des Anpressbandes 6 im Bereich des Umlenkmittels 7 entsteht ein im Vergleich zu sogenannten Nippwalzenpaaren relativ breiter Nipp in Bahnlaufrichtung, wodurch die Einwirkzeit auf die Pressstelle vorteilhaft verlängert wird.

Das umlaufende Anpressband kann auch quer zu seiner Laufrichtung eine gewisse biegeelastische Verformbarkeit aufweisen, wenn dies der Materialpaarung (Film 3/Substrat 1) und den Arbeitsbedingungen, wie Temperaturen und Laufgeschwindigkeit qualitätsverbessernd entspricht. Das Anpressband 6 kann je nach Verwendung eine ausgewählte radial äußere Oberfläche aufweisen, z.B. eine Oberflächevergütung 6A oder eine Oberflächenbeschichtung. Es kann z.B. ein oberflächenvergütetes Edelstahlband verwendet werden, wenn der Film 3, wie bei dem Ausführungsbeispiel nach Figur 3 beispielhaft dargestellt, auf der Nipplänge mit dem Anpressband 6 im körperlichen Kontakt ist.

**BEZUGSZEICHENLISTE**

| | | | |
|---|---|---|---|
| 1 | Substrat | 12A' | Verlängerung |
| 1A | Berührungslinie | 12B | Düsenschlitz |
| 2 | Walze | 12C | Filmbegrenzungsfläche |
| 3 | Film | 12C' | Abrisskante |
| 3A | Filmränder | 14,14' | Führungskante |
| 4 | Anpresseinrichtung | 14A | Führungsschenkel |
| 5 | Umlenkkörper | 15,15' | Wärmeaustauschfahne |
| 6 | Anpressband | | |
| 6A | Vergütung | A | Ansicht |
| 6B | Beschichtung | B | Bewegungsrichtung |
| 7 | Umlenkmittel | D | Doppelpfeile |
| 8 | Klebstoff-Zusammensetzung | L | Lauflänge |
| 10 | Beschichtungsgerät | P | Anpressdruck |
| 12 | Schlitzdüse | U | Umlenkung |
| 12A | Filmbegrenzungselement | T | Teillänge |

## Patentansprüche

1. Laminiervorrichtung zum Abgeben eines im Wesentlichen kontinuierlichen oder durchbrochenen Filmes (3) einer fließfähigen oder fließfähig gemachten Kunststoffzusammensetzung, insbesondere eines Heißschmelzklebers (8), und zum Auftragen des Films (3) auf ein bahnförmiges Substrat (1), ggf. nach vorheriger Abgabe an ein fortschreitendes Übertragungssubstrat (5,6), wie einer Walze (5), und nachfolgender Übertragung auf das bahnförmige Substrat (1), mit einem Beschichtungsgerät (10) zum Auftragen des Films (3) auf einem bahnförmigen Substrat (1), bei dem das Beschichtungsgerät (10) eine seitlich begrenzte oder begrenzbare Schlitzdüse (12) zum Austreten der fließfähigen Kunststoffzusammensetzung zur Bildung des Filmes (3) umfasst,
**dadurch gekennzeichnet, dass**
die Schlitzdüse (12) beidendig mindestens je ein Filmbegrenzungselement (12A) aufweist, welche von dem Düsenschlitz (12B) nach außen in Richtung des bahnförmigen Substrates (1) hervortreten und die die seitlichen Ränder (3A) des Films (3) beim Auftragen einspannen oder einsäumen.

2. Laminiervorrichtung nach Anspruch 1, **dadurch gekennzeichnet, dass** entlang der Filmbegrenzungselemente (12A), insbesondere fahnenförmige, Wärmeaustauschelemente (15, 15') vorgesehen und mit diesen wärmeleitend in Verbindung stehen.

3. Laminiervorrichtung nach Anspruch 1 oder 2, **dadurch gekennzeichnet, dass** die Filmbegrenzungselemente (12A) profilierte Führungskanten (14) zum Einsäumen oder Einspannen der seitlichen Ränder (3A) des Films (3) umfassen.

4. Laminiervorrichtung nach Anspruch 2 und 3, **dadurch gekennzeichnet, dass** die Wärmeaustauschelemente (15, 15') von den profilierten Führungskanten (14, 14') fortweisend angeordnet sind.

5. Laminiervorrichtung nach Anspruch 1, mit einer Anpresseinrichtung (4) zum Herauspressen von Luft zwischen dem kontinuierlichen Film (3) und dem Substrat (1) sowie zum Fixieren des kontinuierlichen Films (3) auf dem Substrat (1), **dadurch gekennzeichnet, dass** das Anpressmittel ein zwischen mehreren Umlenkkörpern (5) umlaufendes Anpressband (6) ist, und dass ein weiteres Umlenkmittel (7) vorgesehen ist, mit dem das mindestens eine Substrat (1) oder der Film (3) der Klebstoff-Zusammensetzung auf einer Lauflänge (L) in Anlage an dem Anpressband (6) derart gehalten wird, dass sich eine weitere Umlenkung (U) des Anpressbandes ergibt.

6. Laminiervorrichtung nach Anspruch 5, **dadurch gekennzeichnet, dass** das mindestens eine weitere Umlenkmittel (7) im Bereich einer Teillänge (T) des Anpressbandes (6) angeordnet ist, der zwischen zwei der Umlenkkörper (5) des Anpressbandes gelegen ist.

7. Laminiervorrichtung nach Anspruch 5 oder 6, **dadurch gekennzeichnet, dass** das umlaufende Anpressband (6) quer zu seiner Laufrichtung biegeelastisch verformbar ist.

8. Laminiervorrichtung nach einem der Ansprüche 5 bis 7, bei dem ein umlaufendes Anpressband (6) mit einer Oberflächenvergütung (6A) oder einer Oberflächenbeschichtung (6B) zur Verringerung der Anhaftung an dem Substrat (1) oder dem angepressten Film (3) der Klebstoff-Zusammensetzung verwendet wird.

## Claims

1. Laminating apparatus for discharging a substantially continuous or interrupted film (3) of a polymer composition that is freely flowing or can be rendered freely flowing, especially a hot-melt adhesive (8), and for applying the film (3) to a web-like substrate (1), if appropriate after first being discharged onto an advancing transfer substrate (5, 6), such as a roller (5), and subsequently transferred to the web-like substrate (1), with a coating appliance (10) for applying the film (3) to a web-like substrate (1), in which the coating appliance (10) comprises a laterally delimited or delimitable slot nozzle (12) for emitting the freely flowing polymer composition to form the film (3),
**characterized in that**
the slot nozzle (12) has at least one film-delimiting element (12A) at each of both ends, which elements protrude from the nozzle slot (12B) outwards in the direction of the web-like substrate (1) and clamp or hem the lateral edges (3A) of the film (3) in as it is being applied.

2. Laminating apparatus according to Claim 1, **characterized in that** heat exchange elements (15, 15'), in particular vane-like heat exchange elements (15, 15'), are provided along the film-delimiting elements (12A) and are in thermally conducting connection with them.

3. Laminating apparatus according to Claim 1 or 2, **characterized in that** the film-delimiting elements (12A) comprise profiled guiding edges (14) for hemming or clamping in the lateral edges (3A) of the film (3).

4. Laminating apparatus according to Claims 2 and 3, **characterized in that** the heat exchange elements (15, 15') are arranged as an extension of the profiled guiding edges (14, 14').

5. Laminating apparatus according to Claim 1, with a pressing device (4) for forcing air out from between the continuous film (3) and the substrate (1) and for fixing the continuous film (3) on the substrate (1), **characterized in that** the pressing means is a pressing band (6) circulating between a number of deflecting bodies (5), and **in that** a further deflecting means (7) is provided, with which the at least one substrate (1) or the film (3) of the adhesive composition is kept in contact with the pressing band (6) over a running length (L) in such a way that a further deflection (U) of the pressing band is obtained.

6. Laminating apparatus according to Claim 5, **characterized in that** the at least one further deflecting means (7) is arranged in the region of a partial length (T) of the pressing band (6) that is located between two of the deflecting bodies (5) of the pressing band.

7. Laminating device according to Claim 5 or 6, **characterized in that** the circulating pressing band (6) is flexurally deformable transversely to its running direction.

8. Laminating apparatus according to one of Claims 5 to 7, in which a circulating pressing band (6) with a surface finish (6A) or a surface coating (6B) for reducing the adhesive attachment to the substrate (1) or the pressed film (3) of the adhesive composition is used.

## Revendications

1. Dispositif de stratification destiné à décharger un film (3) pratiquement continu ou ajouré d'une composition de matériau synthétique pouvant s'écouler ou étant rendue apte à l'écoulement, en particulier d'un adhésif thermofusible (8), et à appliquer le film (3) sur un substrat (1) en forme de ruban, le cas échéant après déchargement préalable sur un substrat de transfert (5,6) qui avance, tel qu'un cylindre (5), et transfert consécutif sur le substrat (1) en forme de ruban, présentant un appareil de revêtement (10) pour appliquer le film (3) sur un substrat (1) en forme de ruban, dans lequel l'appareil de revêtement (10) présente une filière (12) à orifice plat, délimitée ou pouvant être délimitée latéralement pour la sortie de la composition de matériau synthétique pouvant s'étaler pour la formation du film (3), **caractérisé en ce que** la filière (12) à orifice plat présente aux deux extrémités au moins à chaque fois un élément (12A) de délimitation du film, qui s'avance de l'orifice plat (12B) de la filière vers l'extérieur dans la direction du substrat (1) en forme de bande et qui fixe ou borde les bords latéraux (3A) du film (3) lors de l'application.

2. Dispositif de stratification selon la revendication 1, **caractérisé en ce que** des éléments d'échange thermique (15, 15'), en particulier en forme de drapeaux, sont prévus le long des éléments (12A) de délimitation du film et sont reliés à ceux-ci de manière à guider la chaleur.

3. Dispositif de stratification selon la revendication 1 ou 2, **caractérisé en ce que** les éléments (12A) de délimitation du film comprennent des bords de guidage (14) profilés pour border ou fixer les bords latéraux (3A) du film (3).

4. Dispositif de stratification selon la revendication 2 et 3, **caractérisé en ce que** les éléments (15, 15') d'échange thermique sont disposés de manière à s'éloigner des bords de guidage (14, 14') profilés.

5. Dispositif de stratification selon la revendication 1, présentant un dispositif de pressage (4) pour éliminer par pressage l'air entre le film continu (3) et le substrat (1) ainsi que pour fixer le film continu (3) sur le substrat (1), **caractérisé en ce que** le moyen de pressage est une bande de pressage (6) en rotation entre plusieurs corps de déviation (5) et **en ce qu'**un autre moyen de déviation (7) est prévu, qui maintient ledit au moins un substrat (1) ou le film (3) de la composition adhésive sur une longueur (L) en butée contre la bande de pressage (6) de manière telle qu'on obtient une autre déviation (U) de la bande de pressage.

6. Dispositif de stratification selon la revendication 5, **caractérisé en ce que** ledit au moins un autre moyen de déviation (7) est disposé au niveau d'une longueur partielle (T) de la bande de pressage (6) qui est située entre deux des corps de déviation (5) de la bande de pressage.

7. Dispositif de stratification selon la revendication 5 ou 6, **caractérisé en ce que** la bande de pressage (6) qui tourne peut être déformée de manière élastique en flexion transversalement par rapport à sa direction d'avancement.

8. Dispositif de stratification selon l'une quelconque des revendications 5 à 7, dans lequel on utilise une bande de pressage (6) en rotation qui présente un recouvrement de surface (6A) ou un revêtement de surface (6B) pour diminuer l'adhérence au substrat (1) ou au film pressé (3) de la composition adhésive.
